# EUROPEAN PATENT APPLICATION

(11) **EP 4 553 946 A1**
(43) Date of publication of application: **14.05.2025**
(21) Application number: 24788992.6
(22) Date of filing: 09.04.2024
(51) Int. Cl.: H01M 10/0587, H01M 10/04, H01M 10/052

(54) **ELECTRODE ASSEMBLY, MANUFACTURING METHOD THEREFOR, AND SECONDARY BATTERY, BATTERY PACK AND TRANSPORTATION MEANS INCLUDING ELECTRODE ASSEMBLY**

(30) Priority: 13.04.2023 KR 20230048819
(71) Applicant: LG Energy Solution, Ltd., Seoul 07335 (KR)
(72) Inventor: JEONG, Ansoo, Daejeon 34122 (KR)
(74) Representative: Goddar, Heinz J.
(86) International application number: PCT/KR2024/004716
(87) International publication number: WO 2024/215050

(57) **Abstract**

An exemplary embodiment of the present invention relates to a jelly-roll type electrode assembly in which a positive electrode, a separator, and a negative electrode are wound, wherein the positive electrode includes a positive electrode edge portion adjacent to a winding center portion and a sealing portion surrounding the positive electrode edge portion, and wherein the positive electrode edge portion and the sealing portion each have at least a portion rounded.

## Description

### [Technical Field]

The present application claims priority to and the benefit of Korean Patent Application No. 10-2023-0048819 filed in the Korean Intellectual Property Office on April 13, 2023, the entire contents of which are incorporated herein by reference.

The present invention relates to an electrode assembly, a method for manufacturing the same, and a secondary battery, a battery pack, and a moving means including the electrode assembly.

### [Background Art]

In general, a secondary battery refers to a battery that is chargeable and dischargeable unlike a primary battery that are not chargeable, and the secondary battery is widely used in the field of high-tech electronic devices such as a phone, a laptop computer and a camcorder.

The stability of the secondary battery may be secured by a test for stability in which one surface is compressed with a press to measure an internal short.

Depending on a shape of a battery case, the secondary battery is classified into a cylindrical battery and a prismatic battery in which an electrode assembly is embedded in a cylindrical or prismatic metal battery case, and a pouch-type battery in which an electrode assembly is embedded in a pouch-type battery case made of an aluminum laminate sheet.

In addition, the electrode assembly embedded in the battery case is a chargeable/dischargeable power generating device having a laminate structure of a positive electrode/a separator/a negative electrode, and is classified into a folding-type electrode assembly (jelly-roll) in which long sheet-like positive electrode and negative electrode coated with active materials are wound with a separator interposed therebetween, and a stack-type electrode assembly in which a plurality of positive electrodes and negative electrodes having predetermined sizes are sequentially stacked with separators interposed therebetween. Among them, the jelly-roll has advantages in that it is easy to manufacture and has a high energy density per weight.

A jelly-roll type electrode assembly may be formed by winding a positive electrode and a negative electrode, and in this case, the positive electrode and the negative electrode are wound in a state in which a separator is interposed therebetween. However, as the charging and discharging cycles repeated hundreds to thousands of times proceed, the jelly-roll type electrode assembly is subjected to contraction and expansion, and thus bending deformation from an end portion of the positive electrode in the center is caused, resulting in cracks and disconnection or short circuit to greatly impair the safety of the secondary battery.

### [Detailed Description of the Invention]

### [Technical Problem]

The present invention has been made in an effort to provide an electrode assembly capable of preventing an electrode end from cracking a separator and another electrode surface during contraction and expansion of an electrode resulting from charging/discharging of a secondary battery, and a method for manufacturing the same.

### [Technical Solution]

An exemplary embodiment of the present invention provides a jelly-roll type electrode assembly in which a positive electrode, a separator, and a negative electrode are wound, wherein the positive electrode includes a positive electrode edge portion adjacent to a winding center portion and a sealing portion surrounding the positive electrode edge portion, and wherein the positive electrode edge portion and the sealing portion each have at least a portion rounded.

Another exemplary embodiment of the present invention provides a secondary battery including: the electrode assembly; a battery case having an opening on one surface and configured to accommodate the electrode assembly; and a cap assembly joined to the opening surface of the battery case.

Still another exemplary embodiment of the present invention provides a battery pack including the secondary battery.

Yet another exemplary embodiment of the present invention provides a moving device including the battery pack.

Still yet another exemplary embodiment of the present invention provides a method for manufacturing a jelly-roll type electrode assembly in which a positive electrode, a separator, and a negative electrode are wound, the method including: cutting at least a portion of the positive electrode into a round shape; supplying a sealing member to a sealing groove provided in a pair of sealing devices, positioning an end portion of the positive electrode in the sealing groove, and sealing the end portion to form a sealing portion; fixing a shape of the sealing portion by pressing the sealing portion in a longitudinal direction of the positive electrode with a pair of pressure rollers and cooling the sealing portion; and manufacturing an electrode assembly by winding a positive electrode, a separator, and a negative electrode.

### [Advantageous Effects]

In the electrode assembly and the method for manufacturing the same according to the exemplary embodiments of the present invention, the sealing portion surrounds an end portion of a portion where the winding of the positive electrode begins, and both corners of the end portion are rounded, so that the cracking of the negative electrode is prevented at a portion in contact with the positive electrode end portion and disconnection or short circuit is prevented, leading to improvement in safety of the secondary battery.

### [Brief Description of Drawings]

FIG. 1 is a cross-sectional view showing a positive electrode according to an exemplary embodiment of the present invention.
FIG. 2 is a cross-sectional view showing an end portion before an electrode assembly according to an exemplary embodiment of the present invention is wound.
FIG. 3 is a perspective view showing a cut shape of a positive electrode end portion according to an exemplary embodiment of the present invention.
FIG. 4 is a flowchart showing a method for manufacturing an electrode assembly according to an exemplary embodiment of the present invention.
FIG. 5 is a cross-sectional view showing a part of a secondary battery including the electrode assembly according to an exemplary embodiment of the present invention.
FIG. 6 is a perspective view showing a battery pack including the secondary battery according to an exemplary embodiment of the present invention.
FIG. 7 is a perspective view showing a moving device including the battery pack according to an exemplary embodiment of the present invention.

### <Explanation of Reference Numerals and Symbols>

1: secondary battery
2: pack housing
3: battery pack
100: electrode assembly
110: positive electrode
111: positive electrode edge portion
112: sealing portion
120: negative electrode
130: separator
200: battery case
210: beading portion
220: crimping portion
300: cap assembly
310: top cap
320: safety vent
330: current interruptive device
340: sealing gasket
350: CID gasket
V: moving means

### [Best Mode]

The detailed description of the present invention is intended to completely explain the present invention to one skilled in the art. Throughout the specification, unless explicitly described to the contrary, when one component "comprises (includes)" another component or "characterized by" having a certain structure and a certain shape, this means that other components, structures, and shapes may be included without being excluded.

The present invention may be variously modified and may have various exemplary embodiments, and specific exemplary embodiments will be described in detail in the detailed description. However, the description of the exemplary embodiments is not intended to limit the contents of the present invention, but it should be understood that the present invention is to cover all modifications, equivalents and alternatives falling within the spirit and technical scope of the present invention.

Hereinafter, the present invention will be described in detail with reference to the drawings. However, it should be noted that the drawings are provided for illustrating the present invention, and the scope of the present invention is not limited by the drawings.

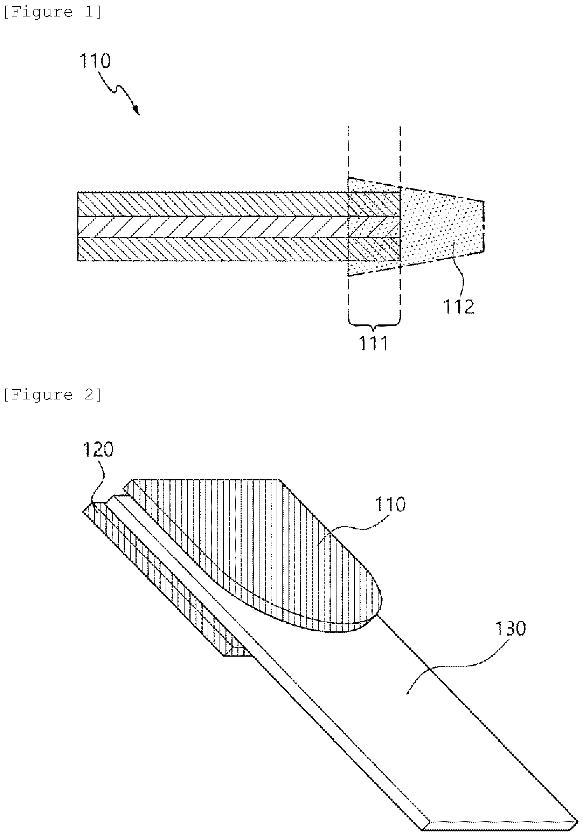

FIG. 1 is a cross-sectional view showing a positive electrode 110 according to an exemplary embodiment of the present invention, and FIG. 2 is a cross-sectional view showing an end portion before an electrode assembly 100 according to an exemplary embodiment of the present invention is wound.

The electrode assembly 100 is a power generating element that includes a positive electrode 110, a negative electrode 120, and a separator 130 positioned between the positive electrode 110 and the negative electrode 120 and can be charged and discharged.

The electrode assembly 100 may include a jelly-roll structure in which the positive electrode 110, the separator 130, and the negative electrode 120 are sequentially stacked and wound. The electrode assembly 100 may further include a separator, and in this case, one of the two separators may be positioned between the positive electrode 110 and the negative electrode 120, and the other may be positioned on one surface of the positive electrode 110 or on one surface of the negative electrode 120. In other words, the electrode assembly 100 according to another exemplary embodiment may include a first separator and a second separator. The first separator may be positioned between the positive electrode 110 and the negative electrode 120, and the second separator may be positioned on one surface of the positive electrode 110, that is, on one surface of the positive electrode 110 where the first separator is not positioned, or one surface of the negative electrode 120, that is, on one surface of the negative electrode 120 where the first separator is not positioned.

The positive electrode 110 may include a positive electrode current collector, a positive electrode active material portion, and a positive electrode uncoated portion. The positive electrode current collector is a metal thin plate with excellent conductivity and may include, for example, an aluminum (Al) foil.

The positive electrode 110 is coated with a positive electrode active material on one or more of both surfaces of the positive electrode current collector. A region coated with the positive electrode active material is a positive electrode active material portion, and a region not coated with the positive electrode active material is a positive electrode uncoated portion. Since the positive electrode uncoated portion is not applied with the positive electrode active material, a first electrode tab can be joined thereto.

The positive electrode active material may include a lithium cobalt oxide with a high operating voltage and excellent capacity characteristics, a lithium nickel oxide with a high reversible capacity and used to easily implement a large-capacity battery, a lithium nickel cobalt oxide where a part of nickel is substituted with cobalt, a lithium nickel cobalt metal oxide where a part of nickel is substituted with manganese, cobalt, or aluminum, a lithium manganese-based oxide excellent in thermal stability and low in cost, a lithium iron phosphate excellent in stability, and the like.

The negative electrode 120 may include a negative electrode current collector, a negative electrode active material portion, and a negative electrode uncoated portion. The negative electrode current collector may include a metal thin plate with excellent conductivity, for example, a copper (Cu) or nickel (Ni) foil.

The negative electrode 120 is coated with a negative electrode active material on one surface or both surfaces of the negative electrode current collector. The negative electrode active material portion is formed by coating or applying the negative electrode active material, and the negative electrode uncoated portion is a region where the negative electrode active material is not coated or applied and the negative electrode current collector is exposed. Since the negative electrode uncoated portion is not applied with the negative electrode active material, a second electrode tab can be joined thereto.

The negative electrode active material may be, for example, a carbon material such as crystalline carbon, amorphous carbon, carbon composite, or carbon fiber, lithium metal, a lithium alloy, or the like. In this case, the negative electrode active material may further include, for example, non-graphite-based SiO (silica), SiC (silicon carbide) or the like for high-capacity design.

The first electrode tab and the second electrode tab serve to transfer electrons collected in the current collectors to an external circuit, and may protrude in opposite directions with respect to the electrode assembly of the jelly-roll structure.

The separator 130 prevents an internal short circuit that may be caused when the positive electrode 110 and the negative electrode 120 come into contact with each other, and may include a porous material to facilitate migration of ions between the electrodes.

In an exemplary embodiment, the separator 130 may include a base material layer made of a porous material. The base material layer may include, for example, any one selected from the group consisting of polyethylene (PE), polystyrene (PS), polypropylene (PP), and a copolymer of polyethylene (PE) and polypropylene (PP).

In another exemplary embodiment, the separator 130 may include a safety reinforced separator (SRS). That is, the separator 130 may include a base material layer made of a porous material and a coating layer coated and formed on the base material layer by applying mixed slurry of inorganic particles and a binder polymer. Preferably, the coating layer includes ceramic particles and has a uniform pore structure formed by an interstitial volume between the ceramic particles that are a component of an active layer, in addition to a pore structure of the separator base material itself.

The coating layer may include ceramic particles including at least one selected from the group consisting of alumina, silica, TiO₂, SiC, and MgAl₂O₄. Such a coating layer is included, so that the safety of the electrode assembly can be enhanced. The coating layer may further include a lithium salt.

The electrode assembly 100 according to an exemplary embodiment of the present invention may further include a sealing portion 112 at one end portion of the positive electrode part 110.

The positive electrode 110 may include a positive electrode edge portion 111 adjacent to a winding center portion of the electrode assembly 100, that is, a winding beginning portion of the positive electrode 110, and a sealing portion 112 surrounding the positive electrode edge portion 111.

In this case, the positive electrode edge portion 111 may refer to an end portion adjacent to the winding beginning portion of the positive electrode 110 or the winding center portion of the electrode assembly 100, or a region at a predetermined distance in a winding direction from an end portion of the positive electrode 110, that is, in a longitudinal direction of the positive electrode 110.

The positive electrode edge portion 111 includes a length of greater than 0 mm and less than or equal to 10 mm in the longitudinal direction of the positive electrode 110 from the end portion of the positive electrode 110. Preferably, the length of the positive electrode edge portion 111 is 1 mm to 5 mm.

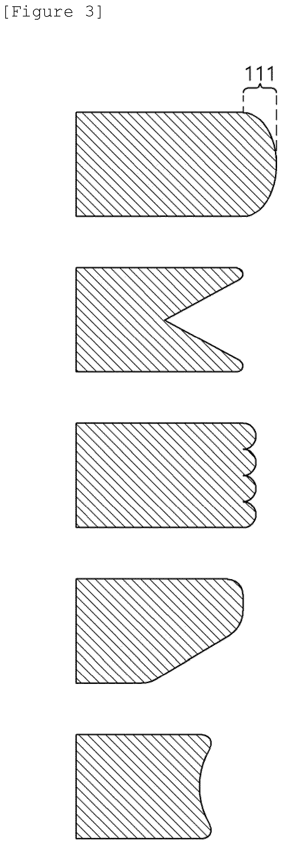

FIG. 3 is a perspective view showing a cut shape of an end portion of a positive electrode according to an exemplary embodiment of the present invention. At least a part of the positive electrode edge portion 111 may be rounded. That is, the positive electrode edge portion 111 includes a rounded portion (not shown) where at least a part of the positive electrode edge portion is rounded, and the rounded portion may be included one or two or more.

The rounded portion may be formed with a width and length of greater than 0% and less than or equal to 50% based on 100% of an electrode width.

A radius of curvature of the rounded portion may be greater than 0% and less than or equal to 50% based on 100% of the electrode width. For example, when the positive electrode width is 50 mm, the radius of curvature may be 25 mm or greater. In an exemplary embodiment, the radius of curvature of the rounded portion may be measured using a vision device, a 3D measurement device, or the like.

The rounded portion may include one or more radii of curvature. For example, the radius of curvature of the rounded part may increase from one end portion to a center of the rounded portion toward the other end portion, and then decrease from the center to the other end portion.

As the electrode assembly 100 is subjected to charging and discharging cycles repeated hundreds to thousands of times, contraction and expansion of the electrode may occur. Due to this, bending deformation may be caused at the positive electrode edge portion 111, which may cause cracks in the electrode. However, by rounding a corner of the positive electrode edge portion 111, where stress can concentrate and damage the separator, cracks and short circuits due to contraction and expansion of the positive electrode edge portion 111 and ignition can be prevented. In particular, in the present exemplary embodiment, it is possible to prevent cracks and short circuits from occurring in the electrode, not on one surface of the positive electrode, but on either side.

When the radius of curvature of the positive electrode edge portion 111 satisfies the above range, it is possible to achieve an effect of preventing stress from being concentrated at the corner of the positive electrode edge portion 111 without reducing the performance of the electrode assembly. In other words, if the radius of curvature of the positive electrode edge portion 111 exceeds the above range, an amount of the positive electrode active material may be reduced, which may cause a problem of reducing the performance of the electrode assembly.

Furthermore, referring to FIG. 3, an end portion of the positive electrode edge portion 111 may be formed into any one of a convex round shape, a V-shape, a multi-convex round shape, an oblique shape, and a concave round shape. In this case, in the V-shape and the oblique shape, the overall shape of the positive electrode edge portion 111 is a V-shape or an oblique shape, and the corner may be rounded. The multi-convex round shape refers to a shape where end portions of irregularities in an irregularity shape are rounded.

These various shapes of the positive electrode edge portion 111 have an effect of dispersing stress applied to the positive electrode edge portion 111 by preventing an angled shape of the end portion or corner of the positive electrode edge portion 111.

The sealing portion 112 has at least one corner rounded like the positive electrode edge portion 111, preventing stress from being concentrated on the corners of the positive electrode edge portion 111 and the sealing portion 112 and cracks and short circuits in the electrode.

The positive electrode 110 shown in FIGS. 2 and 3 is provided for illustrating a shape of the positive electrode edge portion 111, and the sealing portion 112 is not shown. However, the positive electrode 110 according to an exemplary embodiment of the present invention may have the sealing portion 112 having the same or different shape as or from the positive electrode edge portion 111 and positioned at the positive electrode edge portion 111. In this case, at least a part of the sealing portion 112 may be provided in a rounded shape.

The sealing portion 112 may increase friction force with the separator on one surface or both surfaces of the positive electrode 110 to prevent the positive electrode 110 from slipping, thereby preventing a core portion from collapsing (core deformation).

An end portion of the sealing portion 112 may be provided in any one of a convex round shape, a V-shape, a multi-convex round shape, an oblique shape, and a concave round shape, and may be provided in the same shape as the end portion of the positive edge portion 111. For example, when the end portion of the positive electrode edge portion 111 is provided in a convex round shape, the end portion of the sealing portion 112 may also be provided in a convex round shape.

As the sealing portion 112 is provided in the same shape as the positive electrode edge portion 111, a cross-sectional area where the sealing portion 112 is in contact with the separator increases and the friction force of the sealing portion 112 increases, thereby preventing the positive electrode from slipping due to expansion and contraction of the electrode assembly 100.

The sealing portion 112 may extend to a front end of the positive electrode edge portion 111 on one surface or both surfaces of the positive electrode edge portion. Here, the front end of the positive electrode edge portion 111 refers to an empty space between the end portion of the positive electrode edge portion 111 and a central portion of the electrode assembly 100.

The sealing portion 112 may be divided into a first portion positioned on one surface or both surfaces of the positive electrode edge portion 111, where the positive electrode 110 is included between the sealing portions 112, and a second portion positioned at the front end of the positive electrode edge portion 111 and provided with only a sealing member.

A length of the sealing portion 112 may be greater than 0 mm and less than or equal to 5 mm. Preferably, the length of the sealing portion 112 may be 1 mm to 3 mm. The first portion of the sealing portion 112 may be positioned on one surface or both surfaces of the positive electrode 110 by greater than 0% and less than or equal to 50% based on the total length 100% of the sealing portion 112. For example, when the total length of the sealing portion 112 is 4 mm, the first portion may be 2 mm and the second portion may be 2 mm.

A width of the sealing portion 112 may be the same as the width of the positive electrode 110 or may be 0.5 mm to 1 mm wider than the width of the positive electrode 110. When the width of the sealing portion 112 satisfies the above range, the sealing portion 112 has no or minimal influence on the height and size of the electrode assembly 100, thereby preventing a decrease in energy efficiency of the electrode assembly 100. In other words, if the width of the sealing portion 112 exceeds the above range, the height and size of the electrode assembly 100 increase, thereby increasing the size of the secondary battery and decreasing the energy efficiency of the electrode assembly 100 and the secondary battery.

A thickness of the sealing portion 112 may be reduced toward the winding center portion, that is, in the front end direction of the positive electrode edge portion 111. Specifically, the second portion of the sealing portion 112 may decrease in thickness from the first portion toward the winding center. The thickness of the sealing portion 112 may decrease gradually or stepwise, and preferably may decease gradually.

With this configuration, cracks and overheating that may occur from the end portion of the positive electrode 110 can be prevented. That is, as the demand for high energy density design increases, the electrode tab (third electrode tab or in tap) is bonded to a core portion C of the electrode assembly 100 or more SiO is contained in the negative electrode active material, which inevitably increases the density of the positive electrode and the stress at a step portion of the positive electrode. Here, the step portion of the positive electrode is a portion where a thickness of the positive electrode increases rapidly to 100 µm to 200 µm as the positive electrode is interposed at a beginning point of the positive electrode, and thus, a physical step is formed within the electrode assembly, and corresponds to the positive electrode edge portion 111 in the drawing.

The stress increases at such a step portion of the positive electrode, and therefore, when the portion is continuously pressed during the contraction and expansion process due to charging and discharging, the separator at a portion in contact with the step portion is damaged, thereby increasing the risk of ignition due to crack or short circuit. However, according to an exemplary embodiment of the present invention, the sealing portion 112 is positioned at the positive electrode edge portion 111, prevents damage to the separator at the step portion of the positive electrode, and provides a stable buffering action, so that it is possible to prevent cracks and short circuits caused by repeated contraction and expansion at the positive electrode end portion where stress is high, and thus reduce the risk of ignition.

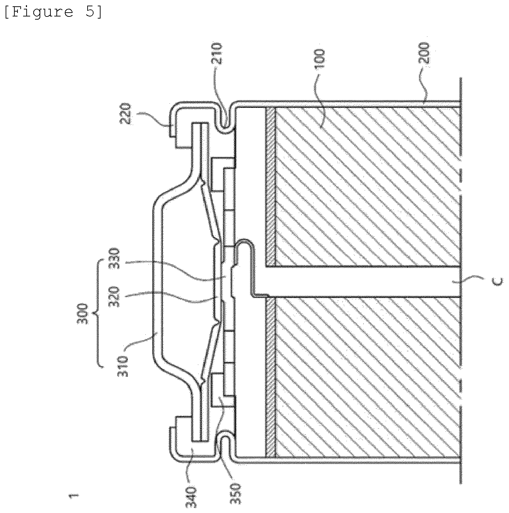

FIG. 5 is a cross-sectional view showing a part of a secondary battery 1 including the electrode assembly 100 according to an exemplary embodiment of the present invention.

The battery case 200 may have a column structure with a space formed therein. The battery case 200 may accommodate the electrode assembly 100 including electrodes and a separator and an electrolyte solution (not shown) in the internal space. The battery case 200 may have a structure in which one side is open (hereinafter, referred to as an opening portion) and the other side is sealed. Here, one side and the other side of the battery case 200 refer to end portions positioned at an upper part and a lower part along a direction of gravity or a center axis of the battery case 200.

The opened upper side surface of the battery case 200 may be provided with a beading portion 210 folded toward the center of the secondary battery 1. The battery case 200 may be provided with a crimping portion 220 above the beading portion 210. That is, the crimping portion 220 may be positioned on the uppermost side of the battery case 200. Here, the upper part refers to a region from the center of the battery case 200 toward the opening portion.

The battery case 200 may be made of a lightweight conductive metal material such as aluminum or aluminum alloy.

The cap assembly 300 may be coupled to the opened surface of the battery case 200, and may include a top cap 310, a safety vent 320, and a current interruptive device 330.

The top cap 310 is positioned at the top of the cap assembly 300, and may protrude in an opposite direction to the center of the battery case 200. The top cap 310 may serve as an electrode terminal so that the protruding portion is electrically connected to the outside. For example, the top cap 310 may serve as a positive electrode terminal.

The top cap 310 may be coupled with a sealing gasket 340 at an edge of the top cap 310, and the sealing gasket 340 may be positioned inside the crimping portion 220 of the battery case 200. The sealing gasket 340 can increase a sealing force between the top cap 310 and the battery case 200.

The top cap 310 may include a protrusion protruding upward, a rim portion that contacts and is coupled to the sealing gasket 340, and a first connection portion connecting the protrusion and the rim portion.

The safety vent 320 is positioned below the top cap 310 and may be electrically connected to the top cap 310. At least a portion of a surface of the safety vent 320 facing the top cap 310 may be in contact with the top cap 310. The safety vent 320 is in contact with the top cap 310 for a certain length from its end portion, and a portion excluding the contact length may be positioned at a predetermined distance away from the top cap 310. The portion of the safety vent 320 in contact with the top cap 310 may be coupled with the sealing gasket 340.

A spacing distance between the safety vent 320 and the top cap 310 may increase from a region in contact with the top cap 310 toward the center of the safety vent 320.

The safety vent 320 may include a contact portion in contact with the top cap 310, a central portion positioned at the center of the safety vent 320 and in contact with the current interruptive device, and a second connection portion connecting the contact portion and the central portion. The safety vent 320 may be provided with a bent portion (or notch) at a portion where the contact portion and the second connection portion and the second connection portion and the central portion are in contact.

In an exemplary embodiment, the safety vent 320 may have an end portion perpendicular to an axial direction of the battery case 200. In this case, the top cap 310 may be provided perpendicular to the axial direction of the battery case 200, like the safety vent 320. That is, the safety vent 320 and the top cap 310 can be positioned horizontally.

In another exemplary embodiment, the safety vent 320 may have an end portion bent to surround an outer circumferential surface of the top cap 310.

In the secondary battery 1 according to the present invention, gas is generated or heat is generated as the electrode assembly 100 accommodated inside the battery case 200 reacts with the electrolyte solution, thereby increasing an internal pressure.

When the internal pressure of the secondary battery 1 increases, the safety vent 320 receives force in a direction of the top cap 310, and the bent portion ruptures, causing the gas inside the secondary battery 1 to be discharged.

The current interruptive device (CID) 330 is positioned below the safety vent 320, and at least a portion thereof may be connected to the safety vent 320.

When the safety vent 320 ruptures as the internal pressure of the secondary battery 1 increases, the current interruptive device 330 is separated from the safety vent 320 to interrupt the current.

More specifically, the current interruptive device 330 may include a connection portion connected to the safety vent 320 at a central portion and protruding in a direction in which the safety vent 320 is positioned, an edge portion excluding the connection portion, and a coupling portion connecting the connection portion and the edge portion. The coupling portion is provided in plural, and the plurality of coupling portions may be positioned spaced apart from each other.

When the safety vent 320 is deformed in the direction in which the top cap 310 is positioned, the coupling portion may be disconnected and the connection portion may be separated from the edge portion. That is, the connection portion is separated in the direction of the top cap 310 while being connected to the safety vent 320.

A CID gasket 350 surrounds an edge of the current interruptive device 330 and can electrically separate the safety vent 320 from the edge portion and coupling portion other than the connection portion of the current interruptive device 330.

According to an exemplary embodiment of the present invention, a battery pack including any one of the secondary batteries described above is provided.

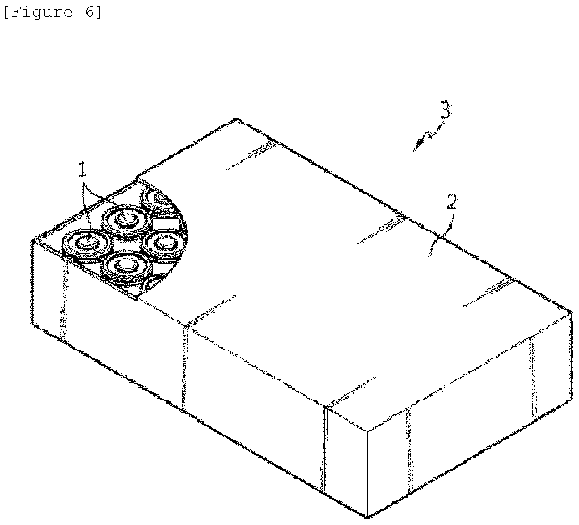

In relation to the above exemplary embodiment, referring to FIG. 6, a battery pack 3 including the secondary battery 1 in a pack housing 2 is shown.

The battery pack according to the above exemplary embodiment has high output/high capacity.

According to an exemplary embodiment of the present invention, a moving means including the battery pack described above is provided.

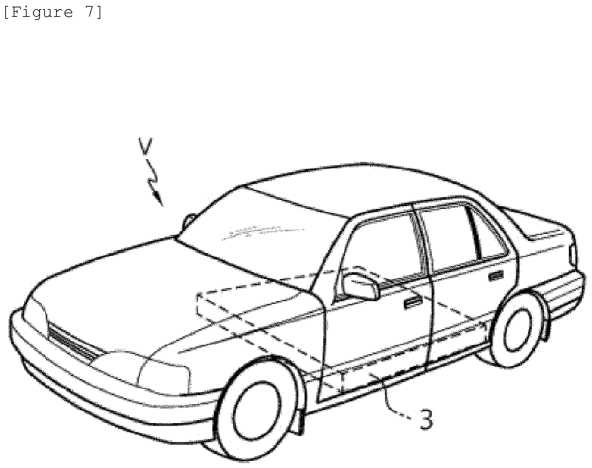

In relation to the above exemplary embodiment, referring to FIG. 7, a moving means V including the battery pack 3 is shown.

Since the moving means according to the above exemplary embodiment uses the battery pack having high output/high capacity, the moving means is excellent in terms of stability and safety.

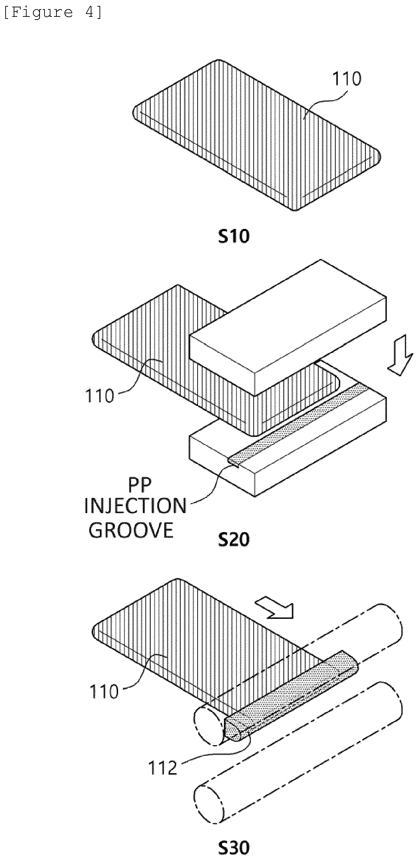

FIG. 4 is a flowchart showing a method for manufacturing an electrode assembly according to an exemplary embodiment of the present invention.

The method for manufacturing an electrode assembly according to an exemplary embodiment of the present invention includes a cutting step (S10) of cutting at least a portion of a positive electrode into a round shape, a sealing step (S20) of supplying a sealing member to a sealing groove provided in a pair of sealing devices, positioning an end portion of the positive electrode in the sealing groove, and sealing the end portion to form a sealing portion, a cooling step (S30) of fixing a shape of the sealing portion by pressing the sealing portion in a longitudinal direction of the positive electrode with a pair of pressure rollers and cooling the sealing portion, and a step of manufacturing an electrode assembly by winding the positive electrode, a separator, and a negative electrode.

The cutting step (S10) is a step of cutting the positive electrode so that there is no angled shape based on a plane of the positive electrode. In the cutting step (S10), the winding beginning portion of the positive electrode, that is, the corner of the positive electrode edge portion is cut round to disperse the stress applied to the positive electrode edge portion due to the contraction and expansion of the electrode assembly over the entire surface of the positive electrode end portion, thereby preventing damage to the separator and cracks in the negative electrode due to the positive electrode end portion.

In the cutting step (S10), at least one of two corners positioned at the end portion of the positive electrode may be cut to be round with a predetermined radius of curvature. Additionally, the cutting step (S10) may include cutting the end portion of the positive electrode into any one of a convex round shape, a V-shape, a multi-convex round shape, an oblique shape, and a concave round shape. For example, in the cutting step (S10), the end portion of the positive electrode may be cut into a convex round shape, and then at least one of angled corners may be cut round.

In the sealing step (S20), at least one of the pair of sealing devices may be provided with a sealing groove. The sealing device includes a first sealing device facing one surface of the positive electrode and a second sealing device facing the other surface of the positive electrode, and the sealing groove may be formed in the first sealing device, the second sealing device, or the first and second sealing devices.

In an exemplary embodiment, the sealing groove may be formed in a rectangular shape, and may have a width that is the same as that of the positive electrode or is 0.5 mm to 1 mm wider than the width of the positive electrode, and a length of greater than 0 mm and less than or equal to 5 mm.

In another exemplary embodiment, the sealing groove may be formed to be rounded at positions corresponding to the two corners of the positive electrode edge portion, and in still another exemplary embodiment, the sealing groove may be formed into any one of a convex round shape, a V-shape, a multi-convex round shape, an oblique line, and a concave round shape.

The sealing step (S20) may include heating the sealing devices; positioning the end portion of the positive electrode in the sealing groove, pressing the same with the pair of sealing devices, and supplying a sealing member to the sealing groove; and lowering a temperature of the sealing device to cool the sealing member.

The sealing device may include a sealing member supply unit that supplies a sealing member to the sealing groove from the outside.

In the step of heating the sealing device, the temperature of the sealing device may be heated to a temperature of 150°C or higher. In an exemplary embodiment, the sealing member may include polypropylene (PP), and the sealing device may maintain a temperature equal to or higher than a melting point of polypropylene so that polypropylene is maintained in a liquid state and can move to the sealing groove along the sealing member supply unit.

In the step of supplying the sealing member to the sealing groove, a sealing member supply time may be 5 seconds or less. When the sealing member supply time is 5 seconds or less, a sealing portion can be formed at the positive electrode end portion without damaging the positive electrode. In other words, if the sealing member supply time exceeds 5 seconds, a problem may occur in which the positive electrode is damaged by the high-temperature sealing member. Preferably, the sealing member supply time may be 2 seconds or less.

The step of cooling the sealing member is to primarily cool the sealing member, and is a step of solidifying the sealing member by cooling the sealing member.

The cooling step (S30) is a step of completely cooling the primarily cooled sealing member to determine a shape of the sealing portion and flattening an outer surface of the sealing portion to minimize a roughness of the sealing portion.

When the pair of pressure rollers cooled in the cooling step (S30) are pressed in the longitudinal direction of the positive electrode, the pressure in the positive electrode may increase in the front end direction of the positive electrode end portion. The pressure of the pair of pressure rollers may increase gradually or stepwise, and preferably increases gradually so that both surfaces of the sealing portion form a predetermined angle with both surfaces of the positive electrode.

The temperature of the pair of pressure rollers may be 150°C or lower. Preferably, the temperature of the pair of pressure rollers may be 70°C to 130°, and more preferably 90°C to 100°C. When the temperature of the pressure rollers satisfies the above range, the sealing member is completely cooled, so that the shape of the cooling portion may not be deformed even when force is applied to the sealing portion due to the expansion and contraction of the electrode assembly or external pressure. That is, if the temperature of the pressure rollers exceeds 150°C, the sealing member is not sufficiently cooled, so that when a pressure is applied to the sealing portion, the shape of the sealing portion is deformed, which may cause stress to concentrate on the sealing portion.

A pressing force of the pair of pressing rollers may be 1 kg/cm to 15 kg/cm. Specifically, when the pair of pressure rollers presses the sealing member or sealing portion positioned on one surface and the other surface of the positive electrode, the pressing force may be 5kg/cm to 10kg/cm, and when the pressure rollers press the sealing member or sealing portion positioned at the front end portion of the positive electrode, the pressing force may be 5 kg/cm to 10 kg/cm. When the pressing force of the pressure rollers satisfies the above range, the positive electrode and the positive electrode active material are not damaged by the pressing force of the pressure rollers, and the sealing portion does not affect the size of the electrode assembly.

The pressing force of the pair of pressure rollers may be adjusted by applying pressure to the pressure rollers from the outside, or by a distance between the pair of pressure rollers.

In an exemplary embodiment, when the thickness of the sealing member before cooling is 100%, the thickness of the sealing member, that is, the sealing portion, after cooling may be reduced to 35% or less. For example, when the electrode thickness is 100 µm and the thickness of the sealing member is 15 µm, the thickness of the sealing portion can be reduced to 5 µm.

A time during which the pair of pressure rollers presses the sealing member or sealing portion may be 0.5 second to 5 seconds.

The method for manufacturing an electrode assembly according to an exemplary embodiment of the present invention may further include a step of cutting an end portion of the sealing portion positioned at the front end of the positive electrode. In this case, the end portion of the sealing portion may be cut in the same shape as the positive electrode end portion.

Although the present invention has been described with reference to preferred exemplary embodiments, it will be understood by one skilled in the art that various modifications and variations can be made to the present invention without departing from the technical spirit and scope of the present invention.

## Claims

1. A jelly-roll type electrode assembly in which a positive electrode, a separator, and a negative electrode are wound,
wherein the positive electrode comprises a positive electrode edge portion adjacent to a winding center portion and a sealing portion surrounding the positive electrode edge portion, and
wherein the positive electrode edge portion and the sealing portion each have at least a portion rounded.

2. The electrode assembly of claim 1, wherein an end portion of the positive electrode edge portion has any one of a convex round shape, a V-shape, a multi-convex round shape, an oblique shape, and a concave round shape, and
wherein the V-shape and the oblique shape each have a rounded corner.

3. The electrode assembly of claim 1, wherein the positive electrode edge portion has a length of greater than 0 mm and less than or equal to 10 mm at an end portion adjacent to the winding center portion of the positive electrode.

4. The electrode assembly of claim 1, wherein an end portion of the sealing portion is provided in the same shape as an end portion of the positive electrode edge portion.

5. The electrode assembly of claim 1, wherein the sealing portion decreases in thickness toward the winding center portion.

6. The electrode assembly of claim 1, wherein the sealing portion extends to a front end of the positive electrode edge portion on one surface or both surfaces of the positive electrode edge portion.

7. The electrode assembly of claim 6, wherein a length of the sealing portion is greater than 0 mm and less than or equal to 5 mm.

8. A secondary battery comprising:
the electrode assembly of any one of claims 1 to 7;
a battery case having an opening on one surface and configured to accommodate the electrode assembly; and
a cap assembly coupled to the opening surface of the battery case.

9. A battery pack comprising the secondary battery of claim 8.

10. A moving device comprising the battery pack of claim 9.

11. A method for manufacturing a jelly-roll type electrode assembly in which a positive electrode, a separator, and a negative electrode are wound, the method comprising:
A cutting step of cutting at least a portion of the positive electrode into a round shape;
A sealing step of supplying a sealing member to a sealing groove provided in a pair of sealing devices, positioning an end portion of the positive electrode in the sealing groove, and sealing the end portion to form a sealing portion;
A cooling step of fixing a shape of the sealing portion by pressing the sealing portion in a longitudinal direction of the positive electrode with a pair of pressure rollers, and cooling the sealing portion; and
Step of manufacturing an electrode assembly by winding a positive electrode, a separator, and a negative electrode.

12. The method of claim 11, wherein the sealing step comprises heating the sealing devices; positioning the end portion of the positive electrode in the sealing groove, pressing the same with the pair of the sealing devices, and supplying the sealing member to the sealing groove; and lowering a temperature of the sealing device to cool the sealing member.

13. The method of claim 12, wherein in the heating the sealing devices, the sealing devices is heated to a temperature of 150°C or higher.

14. The method of claim 11, wherein the cutting step comprises cutting an end portion of the positive electrode into any one of a convex round shape, a V-shape, a multi-convex round shape, an oblique shape, and a concave round shape.

15. The method of claim 11, wherein the pressure rollers increase pressure in the longitudinal direction of the positive electrode.
